# EUROPEAN PATENT APPLICATION

(11) **EP 1 161 993 A1**
(43) Date of publication of application: **12.12.2001**
(21) Application number: 00912921.4
(22) Date of filing: 29.03.2000
(51) Int. Cl.: B01J 35/02, B01J 31/38, C02F 1/32

(54) **PRODUCTION OF HIGH FUNCTIONAL PHOTOCATALYSTS**

(30) Priority: 13.12.1999 JP 35325799
(71) Applicant: Japan as represented by Director-General, Agency of Industrial Science and Technology, Tokyo 100-8921 (JP)
(72) Inventor: TANAKA, Keiichi, Nat. Inst. Materials & Chem. Res., Tsukuba-shi, Ibaraki 305-8565 (JP); VOHRA, Muhammad S., Nat. Inst. Mat. & Chem. Res., Tsukuba-shi, Ibaraki 350-8565 (JP)
(74) Representative: Forstmeyer, Dietmar, Dr. rer. nat., Dipl.-Chem.
(86) International application number: JP0001959
(87) International publication number: WO0141925

(57) **Abstract**

A high-function photocatalyst having its spherical surface partially covered with a polymer having an anionic group is disclosed. This photocatalyst has high efficiency in decomposition of harmful substances, and it is a high-function photocatalyst usable for a long period of time.

## Description

### TECHNICAL FIELD

The present invention relates to a photocatalyst used, for example, in decomposition of harmful organic compounds, a method of manufacturing the same, and a photocatalyst that is obtained immobilizing said photocatalyst.

### BACKGROUND ART

Wastewater that can be processed by a photocatalyst at a practical level is limited. This is because the processing efficiency of a current photocatalyst is not sufficient with regard to most harmful substances. To improve the efficiency, it is considered to carry platinum on the photocatalyst or dope with impurities, but the effect is inadequate, and stable results are not obtained in the latter method.

It is hence an object of the present invention to provide a high-function photocatalyst that exhibits high decomposition efficiency toward harmful materials and that can be used for a long time, and a method of manufacturing the same.

Other and further objects, features, and advantages of the invention will appear more fully from the following description.

### DISCLOSURE OF THE INVENTION

The present inventors, after intensive studies to solve the above problems, discovered that many harmful substances have a positive electric charge in water.

To decompose such harmful substances having a positive electric charge efficiently, it has been found that the photocatalyst should be brought into as closely to the harmful substances as possible, and hence the present invention has been completed.

That is, the present invention was accomplished based on the findings that a significant photocatalytic function is expressed toward harmful materials having a positive electric charge, when the surface of a spherical photocatalyst is partially covered with a polymer having an anionic group.

In the present invention, to cover the surface of a spherical photocatalyst partially with a polymer having an anionic group, the polymer having an anionic group is dissolved in a solvent, to dilute the concentration of the polymer, and then the solution is evaporated and dried, so that the polymer can be entangled in parts of the surface of the spherical photocatalyst.

If the entire photocatalyst is covered with the polymer having an anionic group, chances of light and water existing simultaneously around the catalyst are lowered, and hence it is required that the catalyst should be exposed partially.

### BEST MODE FOR CARRYING OUT THE INVENTION

The photocatalyst utilized in the present invention may be any photocatalyst that can be ordinarily used, and it is not particularly limited. Specific examples of the photocatalyst include titanium dioxide, zinc oxide, zirconium oxide, and tungsten oxide and the like, among them, titanium dioxide being preferred.

The photocatalyst may be used in a form of powder, immobilized powder or film prepared by sol-gel method or vapor deposition method. The shape of the photocatalyst is not particularly limited, and spherical, flat, tubular or fibrous shape may be used.

The photocatalyst, the polymer having an anionic group, and the solvent are mixed, stirred and dried, or alternatively the photocatalyst is immobilized on a glass plate, or natural or synthetic high polymer film or the like, and a solution dissolving the polymer having an anionic group is applied and dried thereon. For example, the photocatalyst may be immobilized with a binder on the ceramic or plastic film. A diluting solvent of the polymer having an anionic group is not particularly limited if it may be any solvent capable of dissolving this polymer, and for example, methanol, ethanol, propanol and the like may be used.

The polymer having an anionic group includes poly(fluorine-subsutituted sulfonic acid) such as Nafion (tradename of Du Pont Company), poly(fluorine containing carboxylic acid) such as Flemion (tradename of Asahi Glass Company), polystyrene sulfonic acid, polyvinyl sulfonic acid and the like, and, among them, Nafion is particularly preferred because of its strong resistance toward decomposition of photocatalyst.

A linear polymer is preferred, and it is required to be insoluble in water and soluble in organic solvent, and the molecular weight is preferably about 500,000 to 1,000,000.

The amount to be used of the polymer having an anionic group is preferred to be 0.05 to 5 ml in a 5-% by weight solution per g of photocatalyst powder, and more preferably 0.1 to 0.4 ml. In the immobilized photocatalyst, it is preferred to be 0.1 to 1 ml of 5-% by weight solution per surface area of 20 cm², more preferably 0.1 to 0.3 ml. The solution is mixed and applied to be uniform, dried at room temperature. Thus, a partial covering can be formed.

In the present invention, the surface of the photocatalyst is partially covered with the polymer having an anionic group. Herein, the partial covering means covering of the surface of the photocatalyst with the polymer so that at least a part of the photocatalyst surface may be exposed so as not to impede the catalytic function of the photocatalyst, and to attract the organic materials having positive ions around the catalyst enough electrostatically, by the anionic group of the polymer existing on the photocatalyst surface. In the present invention, the amount for use of polymer having an anionic group, used for partially covering the surface of the photocatalyst differs according to the concentration of the organic materials to be decomposed or the type of the photocatalyst, but may be set properly within the specified range depending on the situation.

The photocatalyst of the present invention is effective for harmful materials having positive ions. For example, amine compound, imine, pyridine compound and their salts and the like are particularly effective.

Using the photocatalyst of the present invention, these compounds contained in water can be decomposed at high efficiency. The decomposition process can be conducted by that the wastewater to be treated is brought into contact with the photocatalyst, and irradiated with ultraviolet ray.

Applicable objects of the photocatalyst of the present invention are not limited to harmful substances in water, but include harmful gases, for example, gaseous amine.

The light source of irradiation is, preferably, a light source containing light of shorter wavelength than 380 nm. Such examples include low pressure or high pressure mercury vapor lamp, xenon lamp, halogen lamp, blacklight, and sunlight etc.

The mechanism why the photocatalyst of the present invention can decompose the organic materials having a positive ion efficiently is not fully understood, but it seems that the anionic group of the polymer existing on the surface of the photocatalyst attracts the organic materials having a positive ion to the photocatalyst, and that the hydroxyl radical released by the photocatalyst at a close distance efficiently attacks the organic materials having a positive ion.

The embodiments of the present invention may be summarized as follows.
(1) A high-function photocatalyst having its surface partially covered with a polymer having an anionic group.
(2) The high-function photocatalyst according to above (1), wherein the polymer is a linear polymer.
(3) The high-function photocatalyst according to above (1) or (2), wherein the photocatalyst is in a form of a fine powder with particle size of 0.04 to 1 µm.
(4) The high-function photocatalyst according to any one of above (1) to (3), wherein the polymer having an anionic group is poly(fluorine-substituted sulfonic acid) (for example, Nafion).
(5) The high-function photocatalyst according to any one of above (1) to (4), wherein the photocatalyst is spherical.
(6) The high-function photocatalyst according to any one of above (1) to (5), wherein the photocatalyst is immobilized.
(7) A method of manufacturing a high-function photocatalyst comprising the steps of adding a spherical photocatalyst into a solution having a linear polymer having an anionic group dissolved in a solvent, stirring, and drying.
(8) A method of manufacturing a high-function photocatalyst comprising the steps of immobilizing a photocatalyst on a substrate of a film or the like, for example, with an adhesive, applying thereon a solution dissolving a polymer having an anionic group, and drying.

The photocatalyst of the present invention has been confirmed to decompose organic materials having a positive electric charge efficiently. The efficiency of the photocatalyst itself is also confirmed not to deteriorate for a long period.

### Examples

Next, the present invention will be described in more detail based on examples given below, but the present invention is not meant to be limited by the following examples.

### Example 1

To 0.2 ml of 5-% by weight commercial Nafion solution, 1 ml of methanol was added, and 2 g of titanium dioxide powder (mean particle size 0.15 µm) was mixed to the solution, and the mixture was dried overnight at room temperature. In 500 ml of 10⁻⁴ mol 1⁻¹ (26 ppm) solution of herbicide paraquat, 2 g of titanium dioxide covered with the above-described Nafion was suspended. The suspension was irradiated with a blacklight of 6 W placed in the center of the liquid. First, by stirring the suspension for 120 minutes without irradiation with light, 10% of the initial concentration of the herbicide was decreased. Then, starting irradiation with the light, 75% of the concentration was decomposed after 20 minutes, and 100% of the concentration was decomposed in 90 minutes. In a comparative example of titanium dioxide without covering with Nafion, only 25% of the concentration was decomposed in 20 minutes and 55% of the concentration in 60 minutes.

### Example 2

The same experiment as in Example 1 was conducted except that 2 ml of Nafion solution was used with 2 g of titanium dioxide. First, by stirring for 120 minutes without irradiation with light, 50% of the initial concentration of the herbicide was decreased. It is considered the result was due to adsorption. Later, by irradiation with the light for 5 minutes, only 3% of the concentration was detected.

### Example 3

The same experiment as in Example 1 was conducted except that ethylamine of 10⁻⁴ mol 1⁻¹ (6.9 ppm) was used instead of paraquat. By irradiation with the light for 5 minutes, 55% of the initial concentration of the ethylamine was decomposed, and 80% of the concentration was decomposed in 10 minutes. In case of the titanium dioxide without covering with Nafion, almost nothing of the concentration was decomposed in the first 5 minutes, and only 20% of the concentration was decomposed after 10 minutes.

### Example 4

0.2 ml of 5-% by weight commercial Nafion solution was diluted with 0.5 ml of methyl alcohol, and the solution was applied uniformly on a titanium dioxide thin film prepared by sol-gel method on a glass plate of 45 x 45 mm, and the film was dried for 24 hours at room temperature. This dried plate was put into a cell made of Pyrex glass of 50 (width) x 50 (length) x 10 (thick) mm, and 15 ml of paraquat solution of 10⁻⁴ mol 1⁻¹ was added therein, and the cell was irradiated with high pressure mercury vapor lamp of 500 w. First, by stirring for 90 minutes without irradiation with light, 10% of the initial concentration of the herbicide was decreased. Then, by irradiation with the light, 75% of the initial concentration was decreased in 60 minutes.

### Example 5

To investigate the stability of covering Nafion film, the same experiment as in Example 1 was conducted by using deionized water instead of paraquat. In 27 hours without irradiation with light, 4.5 x 10⁻⁵ mol 1⁻¹ of sulfuric acid ion and 3 ppm of TOC were detected, and there was almost no change of these concentrations until the end of 51 hours. It was considered that sulfuric acid ions were derived from titanium dioxide, and TOC were derived from impurities in Nafion. Afterwards, for 19 days consecutively, irradiation with the light was continued, and samples were taken at proper time intervals. There was no change in sulfuric acid ions, but TOC decreased slightly. Within this time duration, the results suggest that Nafion is stable.

### Example 6

To evaluate reproducibility of the above-described photocatalyst when used repeatedly, after the experiment of example 1, the photocatalyst in the suspension was collected, and a new solution of paraquat was added therein, and the irradiation to the suspension was conducted in the same condition. This operation was repeated 5 times, and the decomposition efficiency was measured each time, but deterioration of efficiency of photocatalyst was not detected.

### INDUSTRIAL APPLICABILITY

The photocatalyst of the present invention is preferable as photocatalyst for decomposing organic materials having positive electric charge efficiently.

Having described our invention as related to the present embodiments, it is our intention that the invention not be limited by any of the details of the description, unless otherwise specified, but rather be construed broadly within its spirit and scope as set out in the accompanying claims.

## Claims

1. A high-function photocatalyst having its surface partially covered with a polymer having an anionic group.

2. The high-function photocatalyst according to claim 1, wherein the polymer is a linear polymer.

3. The high-function photocatalyst according to claim 1 or 2, wherein the photocatalyst is in a form of a fine powder with particle size of 0.04 to 1 µm.

4. The high-function photocatalyst according to any one of claims 1 to 3, wherein the polymer having an anionic group is poly(fluorine-substituted sulfonic acid) (for example, Nafion).

5. The high-function photocatalyst according to any one of claims 1 to 4, wherein the photocatalyst is spherical.

6. The high-function photocatalyst according to any one of claims 1 to 5, wherein the photocatalyst is immobilized on a substrate.

7. A method of manufacturing a high-function photocatalyst comprising the steps of adding a spherical photocatalyst into a solution having a linear polymer having an anionic group dissolved in a solvent, stirring, and drying.

8. A method of manufacturing a high-function photocatalyst comprising the steps of immobilizing a photocatalyst on a substrate of a film or the like, applying thereon a solution dissolving a polymer having an anionic group, and drying.
